# EUROPÄISCHE PATENTSCHRIFT

(11) **EP 0 823 950 B1**
(45) Veröffentlichungstag und Bekanntmachung des Hinweises auf die Patenterteilung: **21.11.2001**
(21) Anmeldenummer: 96913520.1
(22) Anmeldetag: 22.04.1996
(51) Int. Cl.: D21H 17/08, D21H 21/20

(54) **VERFAHREN ZUR HERSTELLUNG STRUKTURFESTER PAPIERE**
PROCESS FOR PRODUCING STRUCTURALLY RESISTANT PAPER
PROCEDE DE FABRICATION DE PAPIER A STRUCTURE RESISTANTE

(30) Priorität: 04.05.1995 DE 19516405
(43) Veröffentlichungstag der Anmeldung: 18.02.1998
(73) Patentinhaber: BAYER AG, 51368 Leverkusen (DE)
(72) Erfinder: TRÄUBEL, Harro, D-51373 Leverkusen (DE); KÖNIG, Klaus, D-51519 Odenthal (DE)
(86) Internationale Anmeldenummer: EP9601670
(87) Internationale Veröffentlichungsnummer: WO9635019

(56) Entgegenhaltungen:
- EP-A- 0 564 912
- EP-A- 0 582 166
- WO-A-96/20309

## Beschreibung

Marktübliche Produkte zur Naß- und Trockenverfestigung von Papier sind entweder Kondensate aus Epichlorhydrin und Polyaminen und enthalten organisch und salzartig gebundenes Chlor oder Polykondensate des Formaldehyds, die unter Hitze und Feuchtigkeitseinwirkung Formaldehyd wieder abgeben können. Beide Produktklassen bereiten daher Umweltprobleme, da sie das Abwasser mit Chlor oder Formaldehyd belasten.

Aus EP-A 564 912 ist die Verwendung von Isocyanatgruppen enthaltenden Produkten zur Naß-oder Trockenverfestigung von Papier bekannt.

EP-A 582 166 beschreibt die Verwendung kationifizierter Polyisocyanate, DE-A 4 319 571 kationifizierter, gegebenenfalls hydrophilierter Polyisocyanate hierfür und die deutschen Patentanmeldungen DE 4 418 836.6 und DE-A-4 419 572, die Verwendung solcher Produkte in Mehrkomponentenmischungen.

Der Gehalt der in den zitierten Anmeldungen beschriebenen Produkte an organisch gebundenem Halogen (OX-Gehalt) ist extrem niedrig; deshalb ist die AOX-Belastung (AOX - adsorbierbares organisch gebundenes Halogen) des Abwassers der Papierfabriken daraus sehr klein.

Bei der technischen Anwendung solcher Produkte ist die Verfestigung von Papier sehr stark und auch unter hydrolytischen Bedingungen beständig. Recyclisieren dieser Papiere durch Aufschluß in verdünnter Natronlauge oder Ammoniakwasser gelingt daher nur schwierig oder gar nicht.

Es bestand also das Bedürfnis nach Verfestigungsmitteln, die dem Papier - ohne die Vorteile der Isocyanate aufzugeben - eine "terminierbare" Verfestigung verleihen; d. h. eine Verfestigung, die beim Aufschlagen oder Deinken wieder rückgängig gemacht werden kann.

Die WO-A-9635019 (Prioritätsdatum: 04.05.95; Veröffentlichungstag: 07.11.96) beschreibt ein Verfahren zur Herstellung struktur fester Papiere durch Behandlung mit Isocyanaten, welche über Ester- und/oder Amidgruppen verbundene Isocyanatgruppen enthalten, wobei das Isocyanat-Gemisch Polyether-Modifikationen aufweist.

Es wurde nun gefunden, dass sich in Wasser emulgierbare, Isocyanatgruppen enthaltende, Verbindungen, die im Mittel pro Mol mindestens 2 über Ester- und/oder Amidgruppen verbrückte Isocyanatgruppen aufweisen, hervorragend als Trocken- und Naßfestmittel mit terminierbarer Verfestigung für Papier eignen wobei sie vor der Blattbildung (Masse-Einsatz) d.h. als Zusatz zur Faserstoff-Suspension oder in der Oberfläche, d.h. als Auftrag auf ein bereits gebildetes Papierblatt eingesetzt werden können.

Weiterhin wurde gefunden, dass man verfestigte, in einem gewünschten Umfang wieder aufschließbare Papiere herstellen kann, wenn man zur Verfestigung Isocyanatgemische einsetzt, in denen mindestens 20 Gew.-% der Isocyanate über Ester und/oder Amid-Gruppen verbundene Isocyanatgruppen enthalten.

Die Erfindung betrifft ein Verfahren zur Herstellung strukturfester Papiere (oder papierähnlicher Materialien), die eine Verfestigung, die beim Aufschlagen oder Deinken wieder rückgängig gemacht werden kann, aufweisen, durch Behandlung von Papierstoff in der Masse oder von fertigem Papier in der Oberfläche mit 0,0001 bis 50 Gew.%, vorzugsweise 0,01 - 25 Gew.% (bezogen auf Papiermasse) eines Gemischs von Isocyanaten, die im Mittel mindestens 2 Isocyanatgruppen aufweisen und von denen mindestens 20 Gew.% (vorzugsweise mindestens 50%) solche sind, in denen die NCO-Gruppen über einen organischen Rest verbunden sind, der in der Hauptkette mindestens eine Ester- und/oder Amidgruppe enthält, wobei der Isocyanat-Gemisch keine Polyether-Modifikationen aufweist.

Estergruppen schließen Carbonat- und Allophanatgruppen ein, nicht aber die Urethangruppe selbst Neben den Ester- und/oder Amidgruppen enthaltenden Polyisocyanaten können übliche für die Verfestigung in Papier bekannten Polyisocyanate oder auch übliche Naßfestmittel bzw. Retentionsmittel vorhanden sein.

Die Erfindung betrifft auch die Verwendung solcher Isocyanatmischungen der oben definierten Art, die zur besseren Emulgierung in Wasser Emulgatoren enthalten oder bei denen die Emulgierbarkeit durch Reaktion eines Teils (5 bis 50 %, vorzugsweise 8 bis 30 %) der NCO-Gruppen mit Verbindungen, die zur Salzbildung befähigt sind (z.B. Dimethylolpropionsäure oder N,N-Dimethylethanolamin (vgl. DE-A-4 319 571 oder DE-A-4418836.6)) herbeigeführt wurde.

Die Ester und/oder Amidgruppen enthaltenden Isocyanate können durch Umsetzung von Isocyanaten mit OH-Gruppen enthaltenden Verbindungen mit Ester- und/oder Amidgruppen nach bekannten Verfahren hergestellt werden.

Als Isocyanate sind Diisocyanate wie 1,4-Diisocyanatobutan, 1,6-Diisocyanatohexan, 1,5-Diisocyanato-2,2-dimethylpentan, 2,2,4-bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat), 4,4'-Diisocyanatodicyclohexylmethan und deren Gemische geeignet. Prinzipiell können auch aromatische Isocyanate, z.B. Toluylendiisocyanate, 4,4'-Diisocyanato-di-phenylmethan eingesetzt werden; wegen deren geringerer Lichtechtheit und zu hoher Reaktivität gegenüber Wasser sind jedoch die aliphatischen Isocyanate bevorzugt. Anteilig können auch Polyisocyanate, die durch Modifizierung der oben genannten Diisocyanate, bzw. Mischungen derselben nach bekannten Verfahren erhalten worden sind, und die Uretdion-, Urethan-, Isocyanurat-, Biuret-, oder Allophonatgruppen enthalten, mit eingesetzt werden.

Als OH-Gruppen enthaltende Verbindungen mit Ester und/oder Amidgruppen sind Produkte geeignet, die im Mittel mindestens 2 OH-Gruppen haben und im Mittel mindestens eine Ester und/oder Amidgruppe aufweisen.

Geeignet sind z.B. kurzkettige Polyester wie sie durch Veresterung von Diolen und/oder Triolen mit Dicarbonsäuren oder Dicarbonsäureanhydriten, bzw. durch Umesterung mit Diacarbonsäureestern kurzkettiger monofunktioneller Alkohole und Abdestillation dieser Alkohole entstehen.

Als Säurekomponenten seien genannt: Kohlensäuredimethylester, -diethylester, -diphenylester, Ethylenglykolcarbonat, Propylenglykolcarbonat, Oxalsäure-, Malonsäurediester, Bernstein-, Glutar-, Maleinsäure sowie ihre entsprechenden Anhydride, Adipin-, Sebacin-, (auch hydrierte) Phthal-, Hydroxymono- oder Dicarbonsäuren (ggfs. in Form innerer Ester (Lactone)), wie Glykol-, Wein-, Milch-, Zitronen-,Hydroxycapron-, sowie Hydroxybutter- oder Ricinolsäure.

Als Diole sind z.B. die technisch verfügbaren, Ethan-, Propan- (1.2 oder 1.3-), isomere Butan-, Pentan-, Hexan- etc. Diole, ferner ethergruppenhaltige Oligo- oder Polymere von Ethylen- und Propylenglykol geeignet. Cycloaliphatische oder aromatische Diole seien erwähnt - sind aber wegen der hohen Viskosität der Ester nicht bevorzugt. Geeignete Triole sind beispielsweise Glycerin, Trimethylolpropan.

Polyester werden durch Kondensation der Säuren und/oder deren Ester monofimktioneller Alkohole und/oder der Anhydride der Säuren mit den aufgeführten Di- oder Triolen nach bekannten Verfahren gewonnen. Durch Einsetzen der OH-Verbindungen im Überschuß und anschließende Extraktion mit Wasser oder durch Kurzwegdestillation kann eine enge Molgewichtsverteilung und damit eine niedrige Viskosität erzeugt und ein geringer Gehalt an nicht Ester tragenden Komponenten erzielt werden. Ebenfalls gut geeignet ist die ringeöffnende Umesterung von Lactonen (beispielsweise Butyro-Valero- oder Caprolacton). Diese Umesterung kann ggfs. mit den oben genannten Maßnahmen gekoppelt werden.

Besonders geeignete, OH-Gruppen enthaltende Verbindungen werden durch Reaktion einer Di- oder Hydroxy-Carbonsäure mit Alkylenoxyd erhalten. Dadurch entstehen in einfacher Weise definierte, niedermolekulare Esterdiole.

Amidgruppen enthaltende OH-Verbindungen können aus den genannten Säuren oder deren Estern (Lactonen) durch Reaktion mit Hydroxyaminen, die eine sekundäre Aminogruppe wie z.B. Addukte des Ethyl- oder Propylenoxyds an Mono-alkylamin (Methyl-, Ethylen- etc. Amin) enthalten, hergestellt werden.

Diese Reaktion ist besonders geeignet, weil sie durch die Selektivität der Aminogruppen zu überwiegend definierten Verbindungen führt. Die mittleren Molgewichte der erfindungsgemäßen OH-Verbindungen betragen 148-2000, vorzugsweise 148-1000, besonders bevorzugt 148-500.

Zur Herstellung der erfindungsgemäß einzusetzenden Isocyanate werden NCO-enthaltende Verbindungen mit OH-enthaltender Komponente im NCO/OH-Verhältnis von 1,3 - 20, vorzugsweise 1,5-10 eingesetzt.

Bei NCO/OH >1,5 Verhältnissen bleibt ein - von der Struktur des Isocyanats abhängiger Anteil an nicht reagiertem Isocyanat zurück. Aus gewerbehygienischen Gründen sollten diese freien Isocyanate z.B. durch Dünnschichtdestillation entfernt werden. (In diesem Falle wird sogar ein hohes NCO/OH-Verhältnis bevorzugt, weil dann viskositätserhöhende Kettenverlängerungsreaktionen weitgehend unterdrückt werden.)

Im Umfang der Erfindung liegen auch Ester der hypothetischen Allophansäure (sog. Allophanate), die durch Reaktion einer Urethangruppe mit einer Isocyanatgruppe entstehen können. Wird die Umsetzung der Isocyanate mit den Hydroxylgruppen enthaltenden Verbindungen bei ≥ 150°C oder in Anwesenheit spezieller Katalysatoren (wie z.B:HCl-Gas oder organische Zinnverbindungen.) vorgenommen, so werden je nach Reaktionszeit die Urethangruppen mehr oder minder vollständig in Allophanatgruppen übergeführt. Diese Maßnahme bietet den Vorteil, Produkte hohen Isocyanatgehaltes, hoher Funktionalität und niedriger Viskosität zu gewinnen, was für die vorgesehene Anwendung von Vorteil ist.

Zur Verbesserung der Wasserdispergierbarkeit bzw. -löslichkeit können die Isocyanate mit ionischen Gruppen z.B. gemäß DE-A-4 226 110; DE-A- 431 957 versehen werden.

Das Aufziehen der Isocyanate auf Cellulose in der Masse kann durch Einführen tertiärer Aminogruppen beschleunigt werden. Dazu setzt man einen geringen Anteil (<30 Mol %, vorzugsweise < 15 Mol %) der Isocyanatgruppen mit einem N,N-Dialkyl-alkanolamin (z.B. gemäß LeA 29 036) um.

Die wasserdispergierbaren Polyisocyanate kommen beim erfindungsgemäßen Verfahren in Mengen von 0,005 bis 50 Gew.-%, vorzugsweise 0,1 bis 10 Gew.-%, bezogen auf die Papiermasse zum Einsatz, vorzugsweise werden sie in der Masse eingesetzt, das heißt sie werden der Holzfaser und/oder Cellulosefaser-Dispersion direkt zugesetzt. Vor dem Einsatz der Polyisocyanate, insbesondere wenn diese der Papierpulpe zugesetzt werden, können diese mit der 1-4fachen Menge Wasser bezogen auf Polyisocyanat vordispergiert werden. Dies ermöglicht Verarbeitungszeiten von bis zu 24 Stunden. Bei Verwendung wasserdispergierbarer aromatischer Polyisocyanate sind die Verarbeitungszeiten aufgrund der höheren Reaktivität gegenüber Wasser kürzer und betragen im allgemeinen weniger als 8 Stunden.

Die erfindungsgemäß anzuwendenden wasserdispergierbaren Polyisocyanate können bei den in der Papierindustrie üblichen Verarbeitungstemperaturen eingesetzt werden. Dabei können sich je nach Temperatur unterschiedliche Verarbeitungszeiten für die erfindungsgemäß anzuwendenden Produkte ergeben. So hat man beispielsweise beim Polyisocyanat aus Beispiel A) der DE-A-4 211 480 (pH 7±1) bei 23-25°C relativ lange Verarbeitungszeiten, denn es liegen bei dieser Temperatur nach 5 Stunden noch ≥ 60 % Isocyanatgruppen vor. Bei einer Temperatur von 35°C liegen bei Polyisocyanat A) nach 5 Stunden noch ≥ 50% und bei 50°C nach 3 Stunden noch ≥33% Isocyanatgruppen vor. Die Verarbeitungszeit bei einer bestimmten Temperatur kann also durch die Wahl eines geeigneten, erfindungsgemäß anzuwendenden Polyisocyanats beeinfluß werden.

Die erfindungsgemäß verwendeten, in Wasser dispergierbaren Polyisocyanate sind sowohl zur Oberflächenbehandlung als auch zur Massebehandlung geeignet Die erfindungsgemäß anzuwendenden Produkte lassen sich auch in der Leimpresse, Size-press etc. einsetzen. Auf diese Weise gelingt es, wasserfeste, öl-und benzinbeständige Papiere herzustellen. Auch für Laminatpapiere sind diese erfindungsgemäßen Produkte hervorragend geeignet, weil sie keine Überladung und damit keinen negativen Einfluß auf die Pigmentretention bringen, und weil man ihre verfestigende Wirkung in einfacher Weise wieder rückgängig machen kann. In dieser Eigenschaft unterscheiden sie sich von bestehenden Naßverfestigungssystemen, die zur Zeit bei Laminat/Dekor angewandt wurden.

Der pH-Wert der Cellulosemasse bzw. des Papiers sollte bei Zusatz der erfindungsgemäß anzuwendenen Produkte vorzugsweise zwischen 5 und 8,5, insbesondere im neutralen Bereich liegen. pH-Werte unter 3 bzw. über 10 sollten vermieden werden.

Die erfindungsgemäß anzuwendenden Produkte ermöglichen die Naßverfestigung von Papier ohne dass eine Belastung des Abwassers mit organischen Halogenverbindungen (bestimmt als AOX-Wert gemäß DIN 38 409 Teil 14) auftritt. Es gelingt auch, eine Verbesserung der Naßreißfestigkeit auch bei milden Trockenbedingungen direkt in der Maschine zu erzielen. Das heißt, man muß nicht - wie gewöhnlich - erhebliche Kondensations- bzw. Reifezeiten der Produkte in Kauf nehmen. Weiterhin zeichnen sich die Produkte dadurch aus, dass sie normale, in der Papierherstellung übliche Weißtöner in ihrer Wirksamkeit nicht hemmen.

Die Produkte können gegebenenfalls auch mit üblichen kationischen Fixiermitteln und Retentionsmitteln, oder konventionellen Naßverfestigungsmitteln gemeinsam eingesetzt werden.

Dadurch kann insbesondere die durch diese konventionellen Naßfestmittel verursachte AOX-Belastung des Abwassers gesenkt werden. Weiterhin wird dabei zumeist die Naßfestwirkung synergistisch verstärkt und die Retention von Pigmenten, Füllstoffen etc. verbessert.

Die erfindungsgemäß zu verwendenden wasserdispergierbaren Polyisocyanate können im Gemisch mit 0,005 bis 50 Gew.-Teilen, vorzugsweise 0,1 bis 10 Gew.-Teilen eines Retentionsmittels eingesetzt werden, wobei die Menge an Retentionsmittel auf die Papiermasse bezogen ist.

Die erfindungsgemäß zu verwendenden wasserdispergierbaren Polyisocyanate können im Gemisch mit 1 bis 400 Gew.-Teilen, vorzugsweise 10 bis 100 Gew.-Teilen eines Polyamidamin-Epichlorhydrin-Harzes gemäß DE-B-1 177 824 bezogen auf das Polyisocyanat, eingesetzt werden.

Zur Prüfung der terminierbaren Verfestigung kann man die ausgerüsteten und nachkondensierten Papiere in einem Pulper wieder aufschlagen oder Deinking-Bedingungen unterwerfen (H.L. Baumgarten et al. "Deinking-Entwicklungsstand einer Schlüsseltechnologie für die Altpapierverwertung". Das Papier 42 (1988) V166-V177 sowie W. Berndt "Die Chemikalien der Deinking-Prozesse" Wochenblatt 15 (1982) 533-541). Dann stellt man erneut ein Papierblatt her und untersucht, ob dieses Blatt stippenfrei (d.h. frei von schlecht aufgeschlossenen, zu gut verfertigten Faseragglomeraten) ist. Einfacher ist ein Blatt in üblicher Weise auf Naßfestigkeit zu prüfen, dann ein gleiches Blatt bei 50°C 24 Stunden lang einer konzentrierten Ammoniaklösung oder einer 1 n Natriumhydroxidlösung auszusetzen, gegebenenfalls zu neutralisieren und zu trocknen und die Naßfestigkeit noch einmal zu bestimmen.

Es werden dann gut aufschlagbare Papiere erhalten, wenn die Naßfestigkeit des mit Alkali behandelten Papieres nur noch 75 %, vorzugsweise nur noch 50 % und besonders bevorzugt < 30 % der Ausgangsnaßfestigkeit beträgt.

### Herstellungsbeispiele der erfindungsgemäßen Isocyanate

### Beispiel A

1164 g (6 Mol) Tetraethylenglykol, 184 g (2 Mol) Glycerin und 792 g (6 Mol) Malonsäuredimethylester wurden unter Zusatz von 150 mg Dibutylzinndilaurat als Umesterungskatalysator unter Stickstoff auf 140°C erhitzt. Die einsetzende Abdestillation von Methanol wurde durch allmähliche Erhöhung der Temperatur auf 180°C aufrecht erhalten. Danach wurde im Verlauf von 4 Stunden bei gleicher Temperatur und abnehmendem Druck (zuletzt 15 mbar) die Kondensation vervollständigt. Es wurde ein niedrigviskoser, im Mittel trifunktionaler Oligoester der OH-Zahl 192 erhalten.

877 g (3 Mol OH) des Oligoesters wurden mit 1764 g (10,5 Mol) Hexamethylendiisocyanat unter Stickstoff 4 Std. bei 80°C gerührt. Danach war der Isocyanatgehalt auf berechnete 28,6% abgefallen. Durch zweimalige Destillation am Kurzwegverdampfer (Manteltemperatur. 140°C, Druck 0,5 mbar) wurde das Rohprodukt von monomerem Diisocyanat befreit. Es wurden 1350 g eines gelblichen Öls mit einem NCO-Gehalt von 8,3 % und einer Viskosität von 9080 mPa.s bei 25°C erhalten.

### Anwendungsbeispiele

### Beispiel 1

Dieses Beispiel zeigt die Wirksamkeit der erfindungsgemäß einzusetzenden Polyisocyanate in der Papiermasse.

Eine Mischung aus je 50 % gebleichtem Birkensulfat- und Kiefersulfat-Zellstoff wurde bei einer Stoffdichte von 2,5 % im Holländer auf einen Mahlgrad von 30° Schopper-Riegler gemahlen. Hiervon wurden 100 g in ein Becherglas gegeben und mit Wasser auf 1000 ml verdünnt.

Die in der folgenden Tabelle angegebenenen Mengen an Polyisocyanat A (bezogen auf Faserstoff) wurden als wässrige Dispersion in das Becherglas gegeben. Diese Dispersion wurde wie folgt hergestellt:

| | |
|---|---|
| 10 g | Polyisocyanat A wurden mit Hilfe von |
| 1 g | Emulgator VA (Bayer AG; ein Emulgator auf Basis von alkoxyliertem Stearylurethan) in |
| 89 g | Wasser emulgiert. |

Von dieser Emulsion wurden (bezogen auf dispergiertes Isocyanat) 5 %, 10 % und 20 % (auf Cellulosefasem bezogen) zugesetzt.

Nach einer Rührzeit von 3 Minuten wurden mit den Inhalten der Bechergläser auf einem Blattbildner (Rapid-Köthen-Gerät) Papierblätter mit einem Flächengewicht von ca. 80 g/m² gebildet. Die Papierblätter wurden bei 85°C 8 Minuten im Vakuum bei 30 mbar getrocknet und im Trockenschrank nach 10 Minuten bei 110°C nacherhitzt.

Aus jedem Papierblatt wurde nach der Klimatisierung 5 Prüfstreifen von 1,5 cm Breite ausgeschnitten und 5 Minuten in destilliertes Wasser eingetaucht. Danach wurden die nassen Streifen in einer Zugprüfmaschine sofort auf ihre Nassbruchlast geprüft. Außerdem wurde ein gemäß Beispiel 1 der EP-A 564 912 hergestelltes Nassfestmittel mit Isocyanatgruppen als Standard mitgeprüft.

Das Papier mit dem erfindungsgemäßen Polyisocyanat A (Trocknung bei 85°C, 8 Min.) wies folgende Nassfestigkeiten auf:

| | 5% | 10% | 20% |
|---|---|---|---|
| Isocyanat A | 4,6 | 7,6 | 8 |
| Isocyanat Beispiel 1 EP-A 564 912 | 9,3 | 9,7 | - |
| Isocyanat Beispiel 1 EP-A 564 912 + Emulgator | 9,5 | 12,7 | - |

### Beispiel 2

Die Versuche des Beispiels 1 wurden an einem Stoff aus 80 % Kiefersulfat und 20 % Birkensulfat (Mahlgrad 35°) mit einer Dispersion wiederholt, bei dem 3,0 % Isocyanat A mit 6,0 % Emulgator VA in 91 % Leitungswasser dispergiert wurden.

Nach der Herstellung des Papierblattes wurde 10 Minuten bei 110°C kondensiert. Das erhaltene Blatt hatte folgende Naßfestigkeiten:

| | |
|---|---|
| 1 % A | 1,4 N |
| 5 % A | 2,2 N |
| 10 % A | 7,1 N |

Unter Aufschlagbedingungen wurden bei 50°C und einem pH = 11 und 2,5% Kaliumpersulfat das Papier innerhalb 40 Minuten Rührzeit wieder aufgeschlagen.

Ein daraus hergestelltes, neues Blatt war stippenfrei.

### Beispiel 3

Dieses Beispiel zeigt die Wirkung der erfindungsgemäßen Produkte im Strich.

75 g/m² Streichrohrpapier aus 70 % Birkensulfat und 30 % Kiefernsulfat (Mahlgrad 35°) und 20 % Kreide (sowie 0,5 % eines Retentionsmittels (RETAMOL C 01 der Bayer AG) wurden in der Leimpresse mit einer Dispersion behandelt, die folgende Produkte enthielt. Das Papier nahm jeweils die angezeigte Menge Isocyanat auf. Nach der Messung der Naßbruchlast wurden die Papiere - um die Wiederaufechlagbarkeit festzustellen - 1 h auf 50°C in 1 n NaOH bzw. NH₃-Lösung getaucht, erhitzt, abgekühlt und nach 16h Liegen bei Raumtemperatur die Naßbruchlast erneut bestimmt. Falls sich die Naßbrnchlast nicht wesentlich von der des unbehandelten Papiers unterschied, ist das Papier dann auch nicht wieder aufschließbar.

| Beispiel 1 EP-A 564 912 **Vergleich** | | Isocyanat A | | |
|---|---|---|---|---|
| 0,5 % | 1 % | 0,5 % | 1 % | |
| 12 | 12,7 | 4,6 | 9,3 | Nassbruchlast ohne Alkali-Behandlung |
| 10 | 12,7 | 0,5 | 0,6 | Nassbruchlast nach NaOH-Behandlung (pH 14) |
| 11 | 13,5 | 2,5 | 7,9 | Nassbruchlast nach Ammoniak-Behandlung (pH 12) |

## Patentansprüche

1. Verfahren zur Herstellung strukturfester Papiere oder papierähnlicher Materialien, die eine Verfestigung, die beim Aufschlagen oder Deinken wieder rückgängig gemacht werden kann, aufweisen, durch Behandlung von Papierstoff in der Masse oder von fertigem Papier in der Oberfläche mit 0,0001 bis 50 Gew.-%, (bezogen auf Papiermasse) eines Gemisches von Isocyanaten, die im Mittel mindestens 2 Isocyanatgruppen aufweisen und von denen mindestens 20 Gew.-% solche sind, in denen die NCO-Gruppen über einen organischen Rest verbunden sind, der in der Hauptkette mindestens eine Ester- und/oder Amidgruppe enthält, wobei das Isocyanat-Gemisch keine Polyether-Modifikationen aufweist.

2. Verfahren nach Anspruch 1, worin neben den Ester- und/oder Amidgruppen enthaltenden Isocyanaten für die Papierbehandlung bekannte Isocyanate und/oder übliche andere Naßfest- und/oder Retentionsmittel eingesetzt werden.

3. Verfahren nach Anspruch 1, worin die Isocyanate durch anteilige Raktion mit Verbindungen, die zur Salzbildung befähigt sind, modifiziert sind.

4. Verfahren nach Anspruch 1, worin die Isocyanate aliphatisch sind.

5. Verfahren nach Anspruch 1, worin das Gemisch von Isocyanaten zusätzlich Emulgatoren enthält.

## Claims

1. Process for the production of structurally strong papers or paper-like materials which have a strengthening, which can be cancelled out during breaking or deinking, by treatment of paper in the pulp or of finished paper in the surface with 0.0001 to 50 % by weight (based on the pulp), of a mixture of isocyanates which contain on average at least two isocyanate groups and of which at least 20 % by weight are those in which the NCO groups are bonded via an organic radical which contains at least one ester and/or amide group in the main chain, the isocyanate mixture not having any polyether modifications.

2. Process according to Claim 1, wherein, in addition to the isocyanates containing ester and/or amide groups, isocyanates known for paper treatment and/or customary other wet-strength and/or retention agents are employed.

3. Process according to Claim 1, wherein the isocyanates are modified by proportionate reaction with compounds which are capable of salt-formation.

4. Process according to Claim 1, wherein the isocyanates are aliphatic.

5. Process according to Claim 1, wherein the mixture of isocyanates additionally comprises emulsifiers.

## Revendications

1. Procédé pour la préparation de papiers ou de matériaux semblables à du papier de structure solide, lesquels présentent une consolidation, qui peut être libérée à nouveau lors d'une désagrégation ou d'un désencrage, par traitement d'une matière de papier dans la masse ou de papier fini dans la surface avec de 0,0001 à 50 % en poids (rapportés à la masse du papier) d'un mélange d'isocyanates, lesquels présentent en moyenne au moins 2 groupes isocyanate et dont au moins 20 % en poids de ceux-ci sont tels que les groupes NCO sont liés dans ceux-ci par l'intermédiaire d'un reste organique, lequel contient dans la chaîne principale au moins un groupe ester et/ou amide, le mélange d'isocyanates ne présentant pas de modification polyéther.

2. Procédé selon la revendication 1, dans lequel on utilise en plus des isocyanates contenant des groupes ester et/ou amide pour le traitement du papier des isocyanates connus et/ou d'autres agents de consolidation à l'état humide et/ou agents de rétention classiques.

3. Procédé selon la revendication 1, dans lequel les isocyanates sont modifiés en prenant part à une réaction avec des composés qui sont capables de former des sels.

4. Procédé selon la revendication 1, dans lequel les isocyanates sont aliphatiques.

5. Procédé selon la revendication 1, dans lequel le mélange d'isocyanates contient en plus des émulsionnants.
